# EUROPÄISCHE PATENTSCHRIFT

(11) **EP 0 987 277 B1**
(45) Veröffentlichungstag und Bekanntmachung des Hinweises auf die Patenterteilung: **19.01.2005**
(21) Anmeldenummer: 99116840.2
(22) Anmeldetag: 02.09.1999
(51) Int. Cl.: C08F 2/06

(54) **Herstellung kugelförmiger Polymerisate**
Preparation of spherical polymers
Préparation de polymères sphériques

(30) Priorität: 15.09.1998 DE 19842055
(43) Veröffentlichungstag der Anmeldung: 22.03.2000
(73) Patentinhaber: AGFA-GEVAERT, 2640 Mortsel (BE)
(72) Erfinder: Podszun, Wolfgang, Dr., 51061 Köln (DE); Harrison, David Bryan Dr., 51373 Leverkusen (DE); Louwet, Frank, Dr., 3590 Diepenwek (BE)

(56) Entgegenhaltungen:
- EP-A- 0 036 969
- WO-A-91/06280
- GB-A- 959 356

## Beschreibung

Die Erfindung betrifft die Herstellung von kugelförmigen Polymerisaten mit einer mittleren Teilchengröße von 0,5 bis 50 µm und enger Teilchengrößenverteilung.

Kugelförmige Polymerisate mit einer mittleren Teilchengröße von 0,5 bis 50 µm werden vielfältig angewendet, z.B. als Abstandshalter für Filmmaterialien, als Träger für Katalysatoren, als Eichsubstanzen für Lichtstreuungsmessungen oder als Ausgangsmaterialien für Chromatographieharze und Ionenaustauscher. Für viele Anwendungen werden Polymerisate mit möglichst einheitlicher Teilchengröße gewünscht.

Zur Herstellung von Polymerisaten mit mittleren Teilchengrößen von 0,5 bis ca. 10 µm wird im allgemeinen die sogenante Dispersionspolymerisation angewendet. Bei diesem Verfahren wird ein Lösungsmittel eingesetzt, daß das Monomer, nicht aber das entstehende Polymer löst. Während der Polymerisation fällt das gebildete Polymer in Form von kleinen Kügelchen aus. Geeignete Lösungsmittel sind dabei in erster Linie Alkohole, Mischungen verschiedener Alkohole und Mischungen aus Alkoholen und Wasser. Es ist ein Kennzeichen dieses Verfahrens, daß der Reaktionsverlauf mit steigender Teilchengröße weniger reproduzierbar ist und die Teilchengrößenverteilung deutlich breiter wird.

A.J. Paine et al. beschreiben in ihrer Arbeit "Dispersion Polymerization of Styrene in Polar Solvents", Macromolecules 1990, 23, 3104-3109, daß bei Verwendung von Butylmercaptan als Kettenübertragungsagens polydisperse Teilchen erhalten werden. Ein ähnlicher Effekt wird in EP 584 407 bei der Dispersionspolymerisation von Methylmethacrylat unter Verwendung von Laurylmercaptan als Molekulargewichtsregler gefunden. Bei beiden Literaturstellen ist der Einfluß des Molekulargewichtsreglers auf die Teilchengröße gering.

Überraschenderweise wurde nun gefunden, daß durch den Zusatz von schwefelfreien Radikalfängern bei der Dispersionspolymerisation die mittlere Teilchengröße zu deutlich höheren Werten verschoben wird. Auf diese Weise werden monodisperse Perlpolymerisate in einem Größenbereich zugänglich, der mit den Methoden des Standes der Technik nicht erreicht werden kann. Darüberhinaus wird in vieien Fälien eine engere Teilchengrößenverteilung erzielt.

Gegenstand der Erfindung ist ein Verfahren zur Herstellung von Perlpolymerisaten mit einer mittleren Teilchengröße von 0,5 bis 50 µm und enger Teilchengrößenverteilung durch Dispersionspolymerisation wenigstens eines Monomeren in einem Lösungsmittel, dadurch gekennzeichnet, daß das Lösungsmittel 5 bis 3000 ppm schwefelfreien Radikalfänger enthält.

Vorzugsweise wird das erfindungsgemäße Verfahren in Anwesenheit eines hochmolekularen Dispergators unter Verwendung eines Initiators durchgeführt.

Für das Verfahren geeignete Monomere sind monoethylenisch ungesättigte Verbindungen, wie Styrol, alpha-Methylstyrol, Chlorstyrol, (Meth)acrylsäureester, z.B. (Meth)acrylsäureester mit Perfluoralkylgruppen. Bevorzugt sind Styrol und Methylmethacrylat. Zur Erzielung von Vernetzungen können anteilmäßig auch Silanmonomere gemäß EP-A-417 539 eingesetzt werden.

Das Lösungsmittel besteht überwiegend aus nichtwäßrigen Lösungsmitteln, wie Dioxan, Aceton, Acetonitril, Dimethylformamid und Alkoholen. Bevorzugt sind niedere Alkohole, insbesondere Methanol, Ethanol, n-Propanol, iso-Propanol, n-Butanol, iso-Butanol und tert.-Butanol. Gut geeignet sind auch Mischungen verschiedener Lösungsmittel, insbesondere Mischungen verschiedener Alkohole. Die Alkohole können auch bis zu 50 Gew.-% Wasser, bevorzugt bis zu 25 Gew.-% Wasser enthalten. Bei Verwendung von Lösungsmittelgemischen können auch unpolare Lösungsmittel, insbesondere Kohlenwasserstoffe, wie Hexan und Heptan in Anteilen von bis zu 50 Gew.-% mitverwendet werden.

Das Verhältnis von Monomer zu Lösungsmittel beträgt 1 : 1 bis 1 : 20, vorzugsweise 1 : 3 bis 1 : 10.

Als hochmolekulare Dispergatoren sind im verwendeten Lösungsmittel lösliche natürliche und synthetische makromolekulare Verbindungen geeignet. Beispiele sind Cellulosederivate, wie Methylcellulose, Ethylcellulose, Hydroxypropylcellulose, Polyvinylacetat, teilverseiftes Polyvinylacetat, Polyvinylpyrrolidon, Copolymerisate aus Vinylpyrrolidon und Vinylacetat, sowie Copolymerisate aus Styrol und Maleinsäureanhydrid. Polyvinylpyrrolidon ist bevorzugt. Der Gehalt an hochmolekularem Dispergator beträgt 0,1 bis 20 Gew.-%, vorzugsweise 0,2 bis 10 Gew.-% bezogen auf das Lösungsmittel.

Zusätzlich zu den Dispergatoren können auch ionische und nicht ionische Tenside eingesetzt werden. Geeignete Tenside sind z.B. Sulfobernsteinsäure-Natriumsalz, Methyltricaprylylammoniumchlorid oder ethoxyliertes Nonylphenol. Die Tenside können in Mengen von 0,1 bis 2 Gew.-% bezogen auf das Lösungsmittel verwendet werden.

Für das erfindungsgemäße Verfahren geeignete Initiatoren sind Verbindungen, die bei Temperaturerhöhung freie Radikale bilden. Beispielhaft seien genannt: Peroxyverbindungen wie Dibenzoylperoxid, Dilaurylperoxid, Bis (p-chlorbenzoylperoxid), Dicyclohexylperoxydicarbonat, und tert.-Amylperoxy-2-etylhexan, desweiteren Azoverbindungen wie 2,2'-Azobis(isobutyronitril) und 2,2'-Azobis(2-methylisobutyronitril). Sofern das polare Medium einen Wasseranteil enthält ist auch Natriumperoxydisulfat geeignet.

Gut geeignet sind auch aliphatische Peroxyester entsprechend den Formeln I, II oder III: 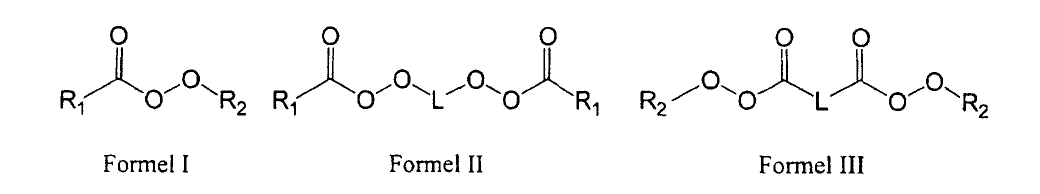 worin
- R₁: ein Alkylrest oder ein Cycloalkylrest mit 2 bis 20 C-Atomen,
- R₂: ein verzweigter Alkylrest mit 4 bis 12 C-Atomen und
- L: ein Alkylenrest oder Cycloalkylenrest mit 2 bis 20 C-Atomen ist.

Beispiele für aliphatische Peroxyester gemäß Formel I sind:
tert.-Butylperoxyacetat
tert.-Butylperoxyisobutyrat
tert.-Butylperoxypivalat
tert.-Butylperoxyoctoat
tert.-Butylperoxy-2-ethylhexanonat
tert.-Butylperoxyneodecanoat
tert.-Amylperoxypivalat
tert.-Amylperoxyoctoat
tert.-Amylperoxy-2-ethylhexanonat
tert.-Amylperoxyneodecanoat

Beispiele für aliphatische Peroxyester gemäß Formel II sind:
2,5-Bis(2-ethylhexanoylperoxy)-2,5-dimethylhexan,
2,5-Dipivaloyl-2,5-dimethylhexan
2,5-Bis(2-neodecanoylperoxy)-2,5-dimethylhexan,

Beispiele für aliphatische Peroxyester gemäß Formel III sind:
Di-tert.-butylperoxyazelat
Di-tert.-amylperoxyazelat

Die Initiatoren werden im allgemeinen in Mengen von 0,05 bis 6,0 Gew.-%, vorzugsweise 0,2 bis 4,0 Gew.-% bezogen auf das Monomer oder die Monomermischung angewendet.

Radikalfänger im Sinne dieser Erfindung sind sowohl Polymerisationsinhibitoren als auch Molekulargewichtsregler.

Als Polymerisationsinhibitoren kommen sowohl anorganische als auch organische Stoffe in Frage. Beispiele für anorganische Inhibitoren sind z.B. Stickstoffverbindungen wie Hydroxylamin, Hydrazin, Natriumnitrit und Kaliumnitrit. Beispiele für organische Inhibitoren sind phenolische Verbindungen wie Hydrochinon, Hydrochinonmonomethylether, Resorcin, Brenzkatechin, tert.-Butylbrenzkatechin, Kondensationsprodukte aus Phenolen mit Aldehyden. Weitere organische Inhibitoren sind stickstoffhaltige Verbindungen, wie Diethylhydroxylamin und Isopropylhydroxylamin.

Als Molekulargewichtsregler kommen z.B. die in DE 3 010 373 genannten schwefelfreien Regler, z.B. der Enolether nach Formel IV, in Frage.

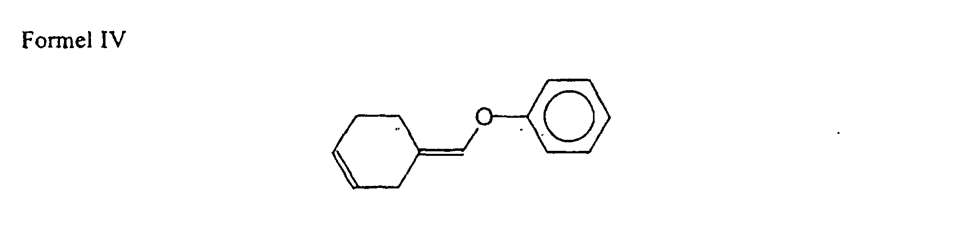

Die Konzentration des Radikalfängers beträgt vorzugsweise 10 - 1 500 ppm bezogen auf das Lösungsmittel. Inhibitoren werden besonders bevorzugt in Mengen von 10-500 ppm, Molekulargewichtsregler bevorzugt in Mengen von 100-1500 ppm, jeweils bezogen auf das Lösungsmittel verwendet.

Die Polymerisationstemperatur richtet sich nach der Zerfallstemperatur des Radikalbildners sowie nach der Siedetemperatur des Lösungsmittels und liegt typischer Weise im Bereich von 50 bis 150°C, vorzugsweise, 60 bis 120°C. Es ist vorteilhaft, bei der Siedetemperatur des Lösungsmittels zu polymerisieren und während der Polymerisation zu rühren. Die Polymerisationszeit beträgt im allgemeinen mehrere Stunden, z.B. 2 bis 30 Stunden.

Die Isolierung der erfindungsgemäßen Polymerisate aus dem Reaktionsgemisch kann durch Filtration oder besonders vorteilhaft durch Sedimentation mit Hilfe einer Zentrifuge oder eines Dekanters erfolgen.

Die nach dem erfindungsgemäßen Verfahren erhaltenen Polymerisate können z.B. als Abstandshalter für Filmmaterialien, als Träger für Katalysatoren oder als Ausgangsmaterialien für Chromatographieharze und Ionenaustauscher eingesetzt werden. Darüberhinaus eignen sie sich in hervorragender Weise zur Herstellung von 3D-Modellen durch Laser-Sintern (sog. "Rapid-Prototyping).

Unter dem Begriff Rapid-Prototyping werden die heute bekannten computergesteuerten additiven, automatischen Modellbauverfahren zusammengefaßt. Das Lasersintern bezeichnet ein Rapid-Prototyping-Verfahren, bei dem Schüttungen aus bestimmten pulverigen Werkstoffen unter Einwirkung von vorzugsweise durch ein Programm gesteuerten Laserstrahlen an bestimmten Raumstellen aufgeheizt und versintert werden.

### Beispiele 1-5 und Vergleichsbeispiele 1 und 2

In einem Reaktionskolben mit Rückflußkühler, Rührer und Thermometer wurden 22,5 g Polyvinylpyrrolidon, 11,25 g Methyltricaprylammoniumchlorid und die in Tabelle 1 angegebene Menge an Diethylhydroxylamin gelöst. Zu dieser Lösung wurde ein Gemisch aus 243,5 g Methylmethacrylat, 6,25 g gamma-Methacryloxypropyl-trimethoxysilan und 2,25 g t-Butylperpivalat (75 %ig) gegeben. Das Gemisch wurde unter Rühren 10 Stunden am Rückfluß (ca. 65°C) erhitzt und anschließend auf 25°C abgekühlt. Danach wurden 100 ml In-HCI zugetropft. Es wurde noch eine weitere Stunde bei 25°C gerührt, anschließend wurde das Perlpolymerisat durch Zentrifugieren isoliert, mit Methanol gewaschen und bei 50°C getrocknet.

**Tabelle 1:**

| **Beispiele** | **Lösungsmittel M: Methanol W: Wasser** **(Vol-%)** | **Menge Diethylhydroxylamin bezogen auf Lösungsmittel** | ⌀ **(50) µm** | ⌀ **(10) µm** | ⌀ **(90) µm** | ⌀ **(90) / ⌀(10) µm** |
|---|---|---|---|---|---|---|
| Vergleich 1 | M | 0 ppm | 2,75 | 1,30 | 6,13 | 4,72 |
| Vergleich 2 | M/W (80/20) | 0 ppm | 1,81 | 1,12 | 3,03 | 2,71 |
| Beispiel 1 | M | 10 ppm | 5,41 | 4,95 | 5,85 | 1,18 |
| Beispiel 2 | M | 20 ppm | 5,45 | 4,95 | 5,94 | 1,20 |
| Beispiel 3 | M/W (80/20) | 50 ppm | 6,37 | 5,47 | 6,66 | 1,22 |
| Beispiel 4 | M | 100 ppm | 7,68 | 6,69 | 10,02 | 1,50 |
| Beispiel 5 | M/W (80/20) | 100 ppm | 7,35 | 6,50 | 9,59 | 1,48 |
| ∅ (50): 50%-Wert der Volumenverteilung, d.h. 50 Vol-% der Teilchen sind kleiner als dieser Wert | | | | | | |
| Ø (10): 10%-Wert der Volumenverteilung, d.h. 10 Vol-% der Teilchen sind kleiner als dieser Wert | | | | | | |
| Ø (90): 90%-Wert der Volumenverteilung, d.h. 90 Vol-% der Teilchen sind kleiner als dieser Wert | | | | | | |
| Ø(90)/Ø(10): Maß für die Breite der Verteilung, je kleiner der Wert, umso enger die Verteilung | | | | | | |

### Beispiele 6 bis 10 und Vergleichsbeispiel 3

In einem 4 l-Reaktor ausgerüstet mit einem Gitterrührer wurden 2 340 g Methanol, 300 g Methylmethacrylat, 180 g Polyvinylpyrrolidon K30 und Enolether der Formel IV in der in Tabelle 2 angegebenen Menge zu einer homogenen Lösung in gemischt. Unter Stickstoff bei einer Rührgeschwindigkeit von 100 U/min wurde innerhalb einer Stunde diese Lösung auf 55°C gebracht und eine Lösung von 9 g 2,2'-Azobis(isobutyronitril) in 165 g Methanol dem Reaktor zugefügt. Die Polymerisationsmischung wurde weitere 20 Stunden bei 55°C und 100 U/min gerührt. Anschließend wurde die fertige Polymerdispersion auf Raumtemperatur abgekühlt und das Perlpolymerisat durch Sedimentation isoliert. Die Teilchengrößen der erhaltenen Perlpolymerisate sind in Tabelle 2 eingetragen.

**Tabelle 2:**

| **Beispiele** | **Menge Enolether (Formel IV) bezogen auf Methanol** | **⌀ (50) µm** | **⌀ (10) µm** | **⌀ (90) µm** | **⌀ (90) / ⌀ (10) µm** |
|---|---|---|---|---|---|
| Vergleich 3 | 0 ppm | 6,25 | 5,45 | 6,77 | 1,24 |
| Beispiel 6 | 400 ppm | 7,09 | 6,49 | 7,69 | 1,18 |
| Beispiel 7 | 800 ppm | 7,53 | 7,12 | 8,30 | 1,17 |
| Beispiel 8 | 1200 ppm | 11,43 | 10,49 | 12,46 | 1,19 |
| Beispiel 9 | 2000 ppm | 13,57 | 12,25 | 14,33 | 1,17 |
| Beispiel 10 | 2400 ppm | 35,39 | 28,5 | 45,34 | 1,59 |

## Patentansprüche

1. Verfahren zur Herstellung von Perlpolymerisaten mit einer mittleren Teilchengröße von 0,5 bis 50 µm und enger Teilchengrößenverteilung durch Polymerisation von Monomeren gelöst in einem Lösungsmittel, welches ein Fällungsmittel für die aus diesen Monomeren erhaltenen Polymerisate darstellt, **dadurch gekennzeichnet, daß** das Lösungsmittel 5 bis 3 000 ppm schwefelfreien Radikalfänger enthält.

2. Verfahren nach Anspruch 1, **dadurch gekennzeichnet, daß** der Radikalfänger ein Polymerisationsinhibitor ist.

3. Verfahren nach Anspruch 1, **dadurch gekennzeichnet, daß** der Radikalfänger ein Molekulargewichtsregler ist.

4. Verfahren nach Anspruch 3, **dadurch gekennzeichnet, daß** der Molekulargewichtsregler ein Enolether ist.

5. Verfahren nach Anspruch 4, **dadurch gekennzeichnet, daß** der Enolether die Formel 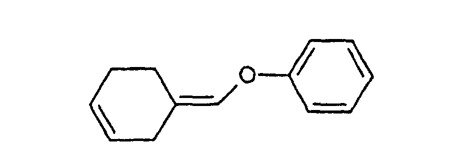 besitzt.

## Claims

1. Process for producing bead polymers having a mean particle size of 0.5 to 50 µm and a narrow particle size distribution by polymerization of monomers dissolved in a solvent that constitutes a precipitation agent for the polymers obtained from these monomers, **characterised in that** the solvent contains 5 to 3000 ppm of sulphur-free radical scavengers.

2. Process according to claim 1, **characterised in that** the radical scavenger is a polymerization inhibitor.

3. Process according to claim 1, **characterised in that** the radical scavenger is a molecular weight regulator.

4. Process according to claim 3, **characterised in that** the molecular weight regulator is an enol ether.

5. Process according to claim 4, **characterised in that** the enol ether corresponds to the following formula :

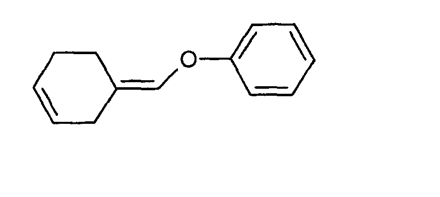

## Revendications

1. Procédé de préparation de polymères en perles qui présentent un diamètre de particule moyen de 0,5 à 50 µm et une répartition granulométrique étroite par la polymérisation de monomères dissous dans un solvant qui constitue un précipitant pour les polymères obtenus à partir de ces monomères, **caractérisé en ce que** ledit solvant contient 5 à 3000 ppm de capteurs radicalaires exempts de soufre.

2. Procédé selon la revendication 1, **caractérisé en ce que** ledit capteur radicalaire est un agent inhibiteur de la polymérisation.

3. Procédé selon la revendication 1, **caractérisé en ce que** ledit capteur radicalaire est un composé agissant sur la masse moléculaire.

4. Procédé selon la revendication 1, **caractérisé en ce que** ledit composé agissant sur la masse moléculaire est un éther d'énol.

5. Procédé selon la revendication 4, **caractérisé en ce que** ledit éther d'énol répond à la formule
